# EUROPEAN PATENT APPLICATION

(11) **EP 2 031 030 A1**
(43) Date of publication of application: **04.03.2009**
(21) Application number: 07744817.3
(22) Date of filing: 06.06.2007
(51) Int. Cl.: C09D 201/00, C09D 5/24, C09D 7/12, G02B 1/10, H01B 13/00, H01B 5/14

(54) **COMPOSITION FOR TRANSPARENT ELECTROCONDUCTIVE FILM FORMATION, TRANSPARENT ELECTROCONDUCTIVE FILM, AND DISPLAY**

(30) Priority: 09.06.2006 JP 2006161586; 09.06.2006 JP 2006161587; 09.06.2006 JP 2006161588
(71) Applicant: Jemco Inc., Akita-shi, Akita 010-8585 (JP); Mitsubishi Materials Corporation, Chiyoda-ku Tokyo 100-8117 (JP); Dai Nippon Toryo Co., Ltd., Osaka-City, Osaka 554-0012 (JP)
(72) Inventor: MUROTA, Masamichi, Akita 010-8585 (JP); IKEDA, Hiroshi, Akita 010-8585 (JP); OMURA, Kunio, Akita 010-8585 (JP); MUROUCHI, Masato, Tochigi 324-8516 (JP); HAYASHI, Kenji, Tochigi 324-8516 (JP); MIZOGUCHI, Daigou, Tochigi 324-8516 (JP); MURAKAMI, Masaaki, Tochigi 324-8516 (JP)
(74) Representative: Dossmann, Gérard
(86) International application number: PCT/JP2007/061474
(87) International publication number: WO 2007/142272

(57) **Abstract**

Through employment of a binder component, tin hydroxide powder serving as a conductive powder, and a high-refractive index powder; through dispersal of tin hydroxide powder and light-transmission-ensuring microparticles in a binder component at a predetermined ratio; and through employment of a specific binder component and, as a conductive powder, tin hydroxide powder and a conductive powder other than tin hydroxide powder at a predetermined ratio, there can be provided a composition which can form a transparent conductive film that exhibits excellent antistatic effect, and has very high visible light transmittance and provides transmitted images with natural hue by virtue of no color absorption wherein, if desired, the film also exhibits excellent scratch resistance and high antiglare effect, or the refractive index of the film can be controlled; such a transparent conductive film, and a display having such a transparent conductive film on a screen thereof.

## Description

The present invention relates to a composition for forming transparent conductive film, to a transparent conductive film, and to a display having a transparent conductive film on a screen thereof. More particularly, the present invention relates to a composition which can form a transparent conductive film through coating or printing the composition on the surface of any of various transparent substrates, particularly on a screen of an LCD, a plasma display, etc., and drying or curing the applied composition; to a transparent conductive film; and to a display having a transparent conductive film on a screen thereof. The formed transparent conductive film exhibits excellent antistatic effect, and has very high visible light transmittance and provides transmitted images with natural hue by virtue of no color absorption. In addition, when the composition of the film is appropriately modified, the film also exhibits excellent scratch resistance and high antiglare effect, or the refractive index of the film can be controlled.

A Braun tube in a television and a cathode-ray tube used in a computer display or the like are display devices which project characters and images on a display screen through causing an electron beam to collide with a phosphor screen emitting red, green, or blue light. Therefore, electrostatic charges generated on the display screen attract dust, degrading vision quality provided on the display screen. Such unwanted generation of electrostatic charges also occurs in a plasma display, which has recently been applied to a display such as a wall-mounted television. Thus, there is demand for preventing deposition of dust, and one measure currently taken is imparting conductivity to an optical film adhered on an FPD surface. Another problem is reduction of visibility of the displayed image due to imposition of external light (e.g., light from a fluorescent lamp). Thus there is also demand for imparting the display screen with an antiglare function with maintaining high light transmittance.

In order to solve the aforementioned problems, hitherto, a laminate structure has been employed. Specifically, a conductive transparent metallic thin film is formed through applying a coating solution in which microparticles of silver, gold, etc. are uniformly dispersed onto a screen of a display device and dried, or through sputtering or vapor deposition, and a transparent layer having a refractive index different from that of the metallic thin film is formed on the top and/or bottom surface of the transparent metallic thin film, whereby charging and light reflection are prevented. One proposed transparent conductive film exhibiting excellent electromagnetic wave-shielding effect and reflection-preventing effect is a laminate structure having a transparent conductive layer including metallic microparticles having a mean particle size of 2 to 200 nm and a transparent coating film having a refractive index different from that of the layer including metallic microparticle (see, for example, Patent Document 1). Another proposed laminated structure has a film to which an antiglare property has been imparted through addition of organic or inorganic particles such as silica particles, particles of acrylic material, and urethane beads (see, for example, Patent Document 2).

Meanwhile, oxide semiconductor transparent film, which generally exhibits high light transmittance with respect to visible light and has low electrical resistance and high film strength, finds a variety of uses such as a transparent electrode for liquid crystal displays and other displays, a window material for solar cells, heat-reflecting film, and antistatic film. Such oxide semiconductors include tin oxide, antimony-containing tin oxide (hereinafter referred to as ATO), tin-containing indium oxide (hereinafter referred to as ITO), and the like (see, for example, Patent Documents 3 to 8).

Conventionally, metal or semi-conducting metal oxide is deposited on an insulating substrate through a vapor-phase technique such as vacuum vapor deposition, sputtering, or ion-plating. Alternatively, a dispersion of the metallic material in a resin solution serving as a binder component (binder) is applied as a coating or an ink onto such a substrate through a coating process or a printing technique.

[Patent Document 1]
   Japanese Patent Application laid-Open (*kokai*) No. 8-77832
[Patent Document 2]
   Japanese Patent Application laid-Open (*kokai*) No. 11-115087
[Patent Document 3]
   Japanese Patent Application laid-Open (*kokai*) No. 5-289313
[Patent Document 4]
   Japanese Patent Application laid-Open (*kokai*) No. 6-295666
[Patent Document 5]
   Japanese Patent Application laid-Open (*kokai*) No. 7-242844
[Patent Document 6]
   Japanese Patent Application laid-Open (*kokai*) No. 8-143792
[Patent Document 7]
   Japanese Patent Application laid-Open (*kokai*) No. 8-199096
[Patent Document 8]
   Japanese Patent Application laid-Open (*kokai*) No. 11-181335

### Disclosure of the Invention

### Problems to be Solved by the Invention

However, a conductive film produced from silver microparticles has problems. Specifically, transmitted light having a wavelength of 400 to 500 nm is absorbed due to a characteristic light transmission spectrum of silver, resulting in yellowing the conductive film, leading to unnatural change in hue of the transmitted image. Also, since the conductive film has low average visible light transmittance, considerable unevenness in color of a transmitted image corresponding to the film thickness distribution profile tends to occur, and prevention thereof deteriorates productivity.

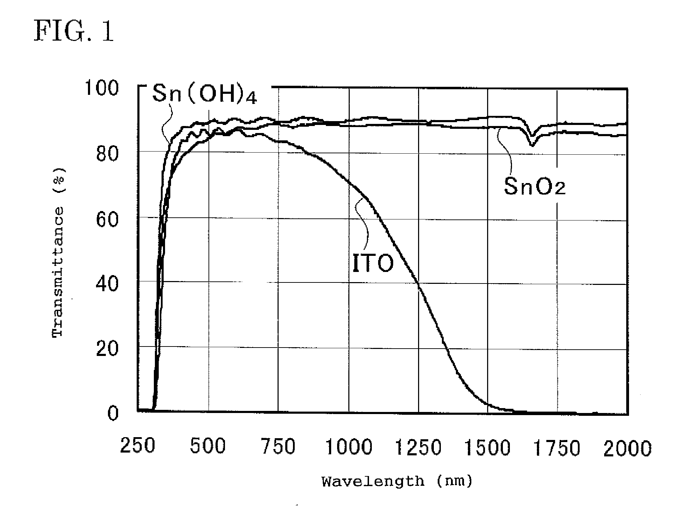

Similarly, a transparent conductive film formed from a composition for forming conductive film including tin-containing indium oxide is yellowed or blued, whereby the hue of a transmitted image is unnaturally changed, which is problematic. An oxide semiconductor transparent film made of ATO or ITO is slightly blue due to presence of a sharp absorption peak in an infrared region, particularly in a near-infrared region. An oxide semiconductor transparent film made of tin oxide, which has no absorption peak in an infrared region, has low light transmittance near 400 nm and is slightly yellow. Therefore, as described above, oxide semiconductor transparent films which have hitherto been provided do not exhibit a flat spectral curve in a visible light region, resulting in unnatural change in hue of a transmitted image, which is problematic (see Fig. 1: a graph showing a correlation between wavelength and light transmittance (ITO) and that of SnO₂). Thus, even when a transparent substrate is employed, difficulty is encountered in producing a transparent conductive film which has high transparency and film characteristics including conductivity at levels required for the purpose of use. Meanwhile, hitherto, a combination of an oxide semiconductor such as ATO or ITO and microparticles which allow light transmission (hereinafter referred to as light-transmission-ensuring microparticles) has been employed so as to impart antiglare effect to a transparent conductive film. However, such a conductive film is slightly colored. Therefore, antiglare transparent conductive film having high transparency is also difficult to produce.

In recent years, anti-reflection film is employed on a display screen of an electric device, an optical product, etc., in which considerable reduction of surface reflection is required. An intermediate layer of such a multi-layer anti-reflection film is made from an inorganic material having high refractive index such as metal oxide, and the refractive index of the film is required to be adjusted depending on the use of the film.

The present invention has been accomplished to solve the aforementioned problems, and an object of the invention is to provide a composition which can form a transparent conductive film that exhibits excellent antistatic effect, and has very high visible light transmittance and provides transmitted images with natural hue by virtue of no color absorption. If desired, the film also exhibits excellent scratch resistance and high antiglare effect, or the refractive index of the film can be controlled. Another object of the invention is to provide such a transparent conductive film. Still another object of the invention is to provide a display having such a transparent conductive film on a screen thereof.

### Means for Solving the Problems

The present inventors have carried out extensive studies in order to attain the above objects and have found that the objects can be attained through employment of a binder component, tin hydroxide powder serving as a conductive powder, and a high-refractive index powder; through dispersal of tin hydroxide powder and light-transmission-ensuring microparticles in a binder component at a predetermined ratio; and through employment of a specific binder component and, as a conductive powder, tin hydroxide powder and a conductive powder other than tin hydroxide powder at a predetermined ratio. The present invention has been accomplished on the basis of this finding.

Accordingly, the present invention provides a composition for forming transparent conductive film, characterized by comprising a binder component, and tin hydroxide powder and a high-refractive index powder which are dispersed in the binder component.

The present invention also provides a composition for forming antiglare transparent conductive film, characterized by comprising a binder component, and tin hydroxide powder and light-transmission-ensuring microparticles which are dispersed in the binder component, wherein, when the total mass of the tin hydroxide powder and the binder component is represented by X, and the mass of light-transmission-ensuring microparticles is represented by Y, the ratio by mass X/Y falls within a range of 99.9/0.1 to 50/50.

The present invention also provides a composition for forming transparent conductive film, characterized by comprising a binder component and a conductive powder dispersed in the binder component, wherein the binder component is an actinic-radiation-curable binder component, the conductive powder is formed of tin hydroxide powder and a conductive powder other than tin hydroxide powder, and the tin hydroxide powder accounts for 45 to 99 mass% with respect to the entire conductive powder.

The present invention also provides a transparent conductive film or an antiglare transparent conductive film, characterized in that the film is produced by applying a composition for forming transparent conductive film or a composition for forming antiglare transparent conductive film, through coating or printing, and drying or curing the applied composition.

The present invention also provides a display characterized by having, on a screen thereof, the transparent conductive film or the antiglare transparent conductive film produced from the composition for forming transparent conductive film or the composition for forming antiglare transparent conductive film (hereinafter the two compositions are collectively referred to as compositions for forming transparent conductive film).

The composition of the present invention for forming transparent conductive film can provide a transparent conductive film or an antiglare transparent conductive film by applying the composition in the form of coating or ink on a surface of a substrate through coating or printing and, subsequently, drying or curing (e.g., through irradiation with actinic radiation) the applied composition. Thus, the composition can be applied to a resin substrate having low heat resistance and to substrates of various shapes, and transparent conductive film or antiglare transparent conductive film can be continuously produced on a large scale. Needless to say, such transparent film having a large area can be readily produced.

[Fig. 1] A graph showing the relationship between wavelength of transmitted light and transmittance of conductive powders.

The refractive index of the transparent conductive film produced from the composition of the present invention for forming transparent conductive film containing a binder component, and tin hydroxide powder and high-refractive index powder which are dispersed in the binder component can be controlled by regulating the relative amount of the high-refractive index powder incorporated into the composition. In addition, through modifying film-formation conditions, a transparent conductive film having excellent transparency, conductivity, and scratch resistance; e.g., a surface resistivity of preferably 10⁷ to 10¹² Ω/square, more preferably 10⁷ to 10¹¹ Ω/square, a light transmittance of preferably 85% or higher, and a haze of 2.5% or lower, can be produced.

Characteristics of the transparent conductive film produced from the composition of the present invention for forming antiglare transparent conductive film, containing a binder component, tin hydroxide powder and light-transmission-ensuring microparticles which are dispersed in the binder component, wherein, when the total mass of the tin hydroxide powder and the binder component is represented by X, and the mass of light-transmission-ensuring microparticles is represented by Y, the ratio by mass X/Y falls within a range of 99.9/0.1 to 50/50 can be regulated through modifying film-formation conditions. Thus, antiglare transparent conductive film having excellent transparency, conductivity, and antiglare property; e.g., a surface resistivity of preferably 10⁷ to 10¹² Ω/square, more preferably 10⁷ to 10¹¹ Ω/square, a light transmittance of preferably 85% or higher, and a haze of preferably 3 to 50%, more preferably 8 to 40%, can be produced.

Characteristics of the transparent conductive film produced from the composition of the present invention for forming transparent conductive film, containing a binder component and a conductive powder dispersed in the binder component, wherein the binder component is an actinic-radiation-curable binder component, the conductive powder is formed of tin hydroxide powder and a conductive powder other than tin hydroxide powder, and the tin hydroxide powder accounts for 45 to 99 mass% with respect to the entire conductive powder can be regulated through modifying film-formation conditions. Thus, transparent conductive film having excellent transparency, conductivity, and scratch resistance; e.g., a surface resistivity of preferably 10⁶ to 10¹¹ Ω/square, more preferably 10⁶ to 10¹⁰ Ω/square, a light transmittance of preferably 85% or higher, and a haze of preferably 2.5% or lower, can be produced.

Thus, the composition of the present invention for forming transparent conductive film can be employed in a variety of field including a transparent electrode of a liquid crystal display, window material for solar cells, infrared-ray-reflecting film, antistatic film, touch panels, plane-shape heaters, and electrophotographic recording, and exhibits excellent performance in the above fields.

### Best Modes for carrying Out the Invention

In the composition of the present invention for forming transparent conductive film, tin hydroxide powder and high-refractive index powder are dispersed in the binder component; tin hydroxide powder and light-transmission-ensuring microparticles are dispersed in the binder component; or tin hydroxide powder and conductive powder other than tin hydroxide powder are dispersed in the binder component. The tin hydroxide powder employed in the invention may be powder of tin hydroxide itself or powder of tin hydroxide containing, as a dopant, at least one species selected from among P, Al, In, Zn, and Sb.

As shown in Fig. 1, the tin hydroxide powder which may be employed in the present invention exhibits high light transmittance over a wide wavelength range. Such tin hydroxide powder may be a commercial product thereof or produced through a known method (e.g., neutralizing an acidic solution in which tin chloride is dissolved with an alkali, to thereby co-precipitate a hydroxide, and drying the co-precipitate). When the tin hydroxide powder has a mean primary particle size of 0.2 µm or less, a transparent conductive film can be produced. However, when the mean primary particle size is in excess of 0.2 µm, the transparency of the formed film tends to decrease. Therefore, the tin hydroxide powder is preferably formed of ultra-microparticles having a mean primary particle size of 0.2 µm or less. When the transparency of the produced transparent film is not an important factor for uses of the film, tin hydroxide powder having a particle size greater than 0.2 µm may also be employed. Notably, the crystallinity of the employed tin hydroxide, as determined through X-ray diffractometry, is preferably in an amorphous state or in a partially crystalline state. The compact of tin hydroxide preferably has a resistivity of 1 × 10⁹ Ω·cm or less.

The tin hydroxide powder which contains at least one species selected from among P, Al, In, Zn, and Sb as a dopant and which can be employed in the present invention is commercially available. Alternatively, the doped tin hydroxide powder may be produced through a known technique: for example, neutralizing an acidic solution in which phosphorus chloride and tin chloride are dissolved with an alkali, to thereby co-precipitate phosphorus/tin hydroxide, and drying the co-precipitate. In the tin hydroxide powder containing at least one species selected from among P, Al, In, Zn, and Sb as a dopant, the amount of dopant with respect to (dopant + Sn) is preferably 0.1 to 20 at%, more preferably 1 to 15 at%. When the amount of dopant is less than 0.1 at%, the effect of dopant is insufficient, whereas when the amount of dopant is in excess of 20 at%, the dopant-containing tin hydroxide particles generally have high electrical resistance, thereby reducing the conductivity of the formed conductive film. Similar to aforementioned case, the tin hydroxide powder containing at least one species selected from among P, Al, In, Zn, and Sb as a dopant is preferably formed of ultra-microparticles having a mean primary particle size of 0.2 µm or less.

In the composition of the present invention for forming transparent conductive film, containing a binder component, and tin hydroxide powder and a high-refractive index powder which are dispersed in the binder component, the high-refractive index powder is incorporated into the composition in order to control the refractive index of the formed transparent conductive film. Thus, no particular limitation is imposed on the species of the high-refractive index powder so long as the objects of the invention can be attained, and known products including commercial products may be employed. Examples of the species of the high-refractive index powder include metal oxides such as zirconium oxide, titanium oxide, cerium oxide, zinc oxide, tin oxide, ATO, ITO, indium oxide, zinc aluminum oxide, antimony pentoxide, and zinc antimonate. Of these, zirconium oxide, titanium oxide, and cerium oxide are more preferred. Similar to the case of the aforementioned tin hydroxide powder, the high-refractive index powder is preferably formed of ultra-microparticles having a mean primary particle size of 0.2 µm or less.

In the composition of the present invention for forming transparent conductive film, the ratio by mass of conductive powder to high-refractive index powder (conductive powder/high-refractive index powder) is preferably 30/70 to 90/10, more preferably 35/65 to 85/15. When the amount of conductive powder as reduced to the above ratio by mass is less than 30/70, the formed film generally has a high refractive index but poor conductivity. In contrast, when the amount of conductive powder as reduced to the above ratio by mass is in excess of 90/10, the formed film has good conductivity but fails to have a target refractive index.

In the composition of the present invention for forming transparent conductive film, the ratio by mass of (conductive powder + high-refractive index powder) to binder component [(conductive powder + high-refractive index powder)/binder component] is preferably 5/95 to 95/5, more preferably 20/80 to 90/10, most preferably 30/70 to 85/15. When the total amount of conductive powder and high-refractive index powder as reduced to the above ratio by mass is less than 5/95, the formed film generally has sufficient transparency but poor conductivity. In contrast, when the total amount of conductive powder and high-refractive index powder as reduced to the above ratio by mass is in excess of 95/5, dispersibility of powder is impaired, and the formed conductive film generally has poor transparency, adhesion to a substrate, and film characteristics.

In the composition of the present invention for forming antiglare transparent conductive film, containing a binder component, and tin hydroxide powder and light-transmission-ensuring microparticles which are dispersed in the binder component, the ratio by mass of tin hydroxide powder which is selected from the group consisting of powder of tin hydroxide and tin hydroxide powder containing as a dopant at least one species selected from among P, Al, In, Zn, and Sb (hereinafter, these tin hydroxide powders are collectively referred to simply as "tin hydroxide powder") to binder component (tin hydroxide powder/binder component) is preferably 5/95 to 95/5, more preferably 15/85 to 90/10, most preferably 25/75 to 85/15. When the amount of tin hydroxide powder as reduced to the above ratio by mass is less than 5/95, the formed film generally has sufficient transparency but poor conductivity. In contrast, when the amount of tin hydroxide powder as reduced to the above ratio by mass is in excess of 95/5, dispersibility of powder is impaired, and the formed conductive film generally has poor transparency, adhesion to a substrate, and film characteristics.

In the composition of the present invention for forming antiglare transparent conductive film, the light-transmission-ensuring microparticles may be formed from, for example, at least one species selected from among an inorganic filler and a resin filler. Examples of the material of the inorganic filler include silica, alumina, talc, zirconia, zinc oxide, and titanium oxide. Such inorganic fillers, which generally have poor transparency, allow light transmission if the size of these particles is considerably reduced. Examples of the material of the resin filler include acrylic resin, polystyrene resin, polyethylene resin, epoxy resin and silicone resin. Such light-transmission-ensuring microparticles are also commercially available. The light-transmission-ensuring microparticles preferably have a spherical shape. The light-transmission-ensuring microparticles preferably have a particle size of 0.1 to 10 µm, more preferably 2 to 8 µm. Antiglare effect can be imparted to a coating film through formation of a film having a uniform embossed pattern from the particles or through formation of a film from the aforementioned inorganic filler microparticles or a resin filler to thereby generate haze in the film. Furthermore, when the total mass of the tin hydroxide powder and the binder component is represented by X, and the mass of light-transmission-ensuring microparticles is represented by Y, the ratio by mass X/Y must fall within a range of 99.9/0.1 to 50/50, preferably 99/1 to 80/20. When the amount of light-transmission-ensuring microparticles is less than a value as reduced to the ratio by mass X/Y, the formed antiglare transparent conductive film exhibits insufficient light-diffusion effect. In this case, transparency and conductivity are high, but sufficient antiglare effect is difficult to attain. When the amount of light-transmission-ensuring microparticles is in excess of a value as reduced to the ratio by mass X/Y, the formed antiglare transparent conductive film exhibits enhanced antiglare effect but has excessively high haze value, which reduces image clearness and light transmittance.

The composition of the present invention for forming transparent conductive film, containing a binder component and a conductive powder dispersed in the binder component, wherein the binder component is an actinic-radiation-curable binder component, the conductive powder is formed of tin hydroxide powder and a conductive powder other than tin hydroxide powder, the conductive powder other than tin hydroxide powder is incorporated into the composition in order to enhance the conductivity of the formed transparent conductive film. Thus, no particular limitation is imposed on the species of the conductive powder so long as the objects of the invention can be attained, and known products including commercial products may be employed. Examples of the species of the conductive powder include metal oxides such as tin oxide, ATO, ITO, zinc aluminum oxide, antimony pentoxide, and zinc antimonate. Of these, tin oxide, ATO, and ITO are more preferred for attaining high conductivity and transparency. Similar to the case of the aforementioned cases, the conductive powder is preferably formed of ultra-microparticles having a mean primary particle size of 0.2 µm or less.

In the composition of the present invention for forming transparent conductive film, the conductive powder is formed from tin hydroxide powder which is selected from the group consisting of powder of tin hydroxide and tin hydroxide powder containing as a dopant at least one species selected from among P, Al, In, Zn, and Sb (hereinafter, these tin hydroxide powders are referred to simply as "tin hydroxide powder") and a conductive powder other than tin hydroxide powder. The tin hydroxide powder accounts for 45 to 99 mass% with respect to the entire conductive powder, preferably 50 to 95 mass%. When the tin hydroxide powder content is less than 45 mass%, the formed transparent conductive film generally has sufficient conductivity but reduced transparency, whereas when the tin hydroxide powder content is in excess of 99 mass%, the formed transparent conductive film has sufficient transparency but non-enhanced conductivity.

In the composition of the present invention for forming transparent conductive film, the ratio by mass of conductive powder to binder component (conductive powder/binder component) is preferably 5/95 to 95/5, more preferably 10/90 to 90/10, most preferably 10/90 to 85/15. When the amount of conductive powder as reduced to the above ratio by mass is less than 5/95, the formed film generally has sufficient transparency but poor conductivity. In contrast, when the amount of conductive powder as reduced to the above ratio by mass is in excess of 95/5, dispersibility of powder is impaired, and the formed conductive film generally has poor transparency, adhesion to a substrate, and film characteristics.

In the composition of the present invention for forming transparent conductive film, containing a binder component, and tin hydroxide powder and a high-refractive index powder which are dispersed in the binder component, no particular limitation is imposed on the binder component so long as the binder component can be dissolved in a solvent employed, can disperse conductive powder and high-refractive index powder, and can bind the conductive powder and the high-refractive index powder to form transparent conductive film. Any of the binder components which are generally employed in coating materials may be used. In the present invention, the binder component is preferably an actinic-radiation-curable binder component.

Examples of the binder component include alkyd resin, polyester resin, unsaturated polyester resin, polyurethane resin, acrylic resin, epoxy resin, phenolic resin, vinyl resin, silicone resin, fluoro-resin, phthalate resin, amino resin, polyamide resin, polyacryl-silicone resin, melamine resin, urea resin, and modified species thereof. These binder resins may be used singly or in combination of two or more species.

If required, the binder component may further contain a cross-linking agent. Any cross-linking agent having, in a molecule thereof, two or more reactive functional groups such as a basic functional group (e.g., amino group), a neutral functional group (e.g., OH group), an acidic functional group (e.g., carboxyl group), or an isocyanate group may be employed.

The binder component may be a radical-polymerizable monomer. So long as the monomer has a radical-polymerizable unsaturated group (α,β-ethylenic unsaturated group), any monomer having a basic functional group (e.g., amino group), a neutral functional group (e.g., OH group), an acidic functional group (e.g., carboxyl group), or no such functional group may be employed.

Examples of the actinic-radiation-curable binder component which may be employed in the composition of the present invention for forming transparent conductive film include acrylate compounds and methacrylate compounds. Hereinafter, acrylate compounds and methacrylate compounds are collectively referred to as (meth)acrylate compounds.

In addition to the above-mentioned (meth)acrylate compounds, examples of the actinic-radiation-curable binder component which may be employed in the composition of the present invention for forming transparent conductive film further include radical-polymerizable monomers and/or oligomers. No particular limitation is imposed on the radical-polymerizable monomers, and any such monomers may be employed so long as the monomers each having a radical-polymerizable unsaturated group (α,β-ethylenic unsaturated group). Examples of such monomers include monomers each having a basic functional group such as an amino group, monomers each having a neutral functional group such as an OH group, monomers each having an acidic functional group such as a carboxyl group, and monomers each having no such a functional group.

Specific examples of radical-polymerizable monomers include non-(meth)acrylate radical-polymerizable monomers such as stryrene, vinyltoluene, vinyl acetate, N-vinylpyrrolidone, acrylonitrile, and allyl alcohol; monofunctional (meth)acrylates such as methyl (meth)acrylate, ethyl (meth)acrylate, isopropyl (meth)acrylate, 2-ethylhexyl (meth)acrylate, butyl (meth)acrylate, cyclohexyl (meth)acrylate, tetrahydrofurfuryl (meth)acrylate, N-vinylpyrrolidone, 2-hydroxyethyl (meth)acrylate, 2-hydroxypropyl (meth)acrylate, polyethylene glycol mono(meth)acrylate, methoxy-polyethylene glycol mono(meth)acrylate, polypropylene glycol mono(meth)acrylate, polyethylene glycol polypropylene glycol mono(meth)acrylate, polyethylene glycol polytetramethylene glycol mono(meth)acrylate, and glycidyl (meth)acrylate; bifunctional (meth)acrylates such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, neopentyl glycol di(meth)acrylate, allyl di(meth)acrylate, bisphenol A di(meth)acrylate, ethylene oxide-modified bisphenol A di(meth)acrylate, polyethylene oxide-modified bisphenol A di(meth)acrylate, ethylene oxide-modified bisphenol S di(meth)acrylate, bisphenol S di(meth)acrylate, 1,4-butanediol di(meth)acrylate, and 1,3-butylene glycol di(meth)acrylate; and (meth)acrylates having 3 or more functionalities such as trimethylolpropane tri(meth)acrylate, glycerol tri(meth)acrylate, pentaerythritol tri(meth)acrylate, pentaerythritol tetra(meth)acrylate, ethylene-modified trimethylolpropane tri(meth)acrylate, and dipentaerythritol hexa(meth)acrylate.

Specific examples of radical-polymerizable oligomers include prepolymers each having at least one (meth)acryloyl group such as polyester (meth)acrylate, polyurethane (meth)acrylate, epoxy (meth)acrylate, polyether (meth)acrylate, oligo (meth)acrylate, alkyd (meth)acrylate, polyol (meth)acrylate, and silicone (meth)acrylate. Of these, polyester (meth)acrylate, epoxy (meth)acrylate, and polyurethane (meth)acrylate are particularly preferred.

In order to impart advantageous actinic-radiation curability to the composition of the present invention for forming transparent conductive film, a polymerization initiator (photo-sensitizer) is preferably incorporated into the composition. Through incorporation of the initiator, the composition can be cured with a small dose of an actinic-radiation. However, since the composition of the present invention for forming transparent conductive film can also be cured by heat, an appropriate radical polymerization initiator (e.g., azobisisobutyronitrile) may be incorporated into the composition as a thermally curing agent instead of the photo-sensitizer.

Examples of the polymerization initiator which allows the resin composition to be actinic-radiation-curable include 1-hydroxycyclohexyl phenyl ketone, benzophenone, benzyl dimethyl ketone, benzoin methyl ether, benzoin ethyl ether, p-chlorobenzophenone, 4-benzoyl-4-methyldiphenyl sulfide, 2-benzyl-2-dimethylamino-1-(4-morpholinophenyl)-butanone-1, and 2-methyl-1-[4-(methylthio)phenyl]-2-morpholinopropanone-1. These polymerization initiators may be used singly or in combination of two or more species. The polymerization initiator is preferably employed in an amount of 0.1 to 20 parts by mass with respect to 100 parts by mass of the binder component, more preferably 1 to 15 parts by mass.

In the composition of the present invention for forming antiglare transparent conductive film, containing a binder component, and tin hydroxide powder and light-transmission-ensuring microparticles which are dispersed in the binder component, no particular limitation is imposed on the binder component so long as the binder component can be dissolved in a solvent employed, can disperse tin hydroxide powder and light-transmission-ensuring microparticles, and can form transparent conductive film. Any of the binder components which are generally employed in coating materials may be used. Examples of the binder component include alkyd resin, polyester resin, unsaturated resin, polyurethane resin, acrylic resin, epoxy resin, phenolic resin, vinyl resin, silicone resin, fluoro-resin, phthalate resin, amino resin, polyamide resin, polyacryl-silicone resin, melamine resin, urea resin, and modified species thereof. These binder resins may be used singly or in combination of two or more species.

If required, the binder component may further contain a cross-linking agent. Any cross-linking agent having, in a molecule thereof, two or more reactive functional groups such as a basic functional group (e.g., amino group), a neutral functional group (e.g., OH group), an acidic functional group (e.g., carboxyl group), or an isocyanate group may be employed.

The binder component may be a radical-polymerizable monomer. So long as the monomer has a radical-polymerizable unsaturated group (α,β-ethylenic unsaturated group), any monomer having a basic functional group (e.g., amino group), a neutral functional group (e.g., OH group), an acidic functional group (e.g., carboxyl group), or no such functional group may be employed.

In the composition of the present invention for forming transparent conductive film which composition employs an actinic-radiation-curable, the actinic-radiation-curable binder component refers to a component which binds tin hydroxide powder and a conductive powder other than tin hydroxide powder to form transparent conductive film. The actinic-radiation-curable binder component has the same meaning as defined above.

So long as the objects of the invention are not impaired, other customary employed additives may be incorporated into the composition of the invention for forming transparent conductive film. Examples of such additives include a dispersant, a dispersing aid, a polymerization inhibitor, a curing catalyst, an anti-oxidant, and a leveling agent.

In the composition of the present invention for forming transparent conductive film, no particular limitation is imposed on the solvent so long as the solvent can dissolve or disperse the binder component, can disperse desired components of conductive powder, high-refractive index powder, and light-transmission-ensuring microparticles, and does not corrode a substrate. Any solvent which is generally employed in coating materials may be used. Examples of the solvent which may be used in the invention include hydrocarbons such as hexane, heptane, cyclohexane, toluene, and m-xylene; halohydrocarbons such as tetrachloromethane and trichloroethylene; ketones such as acetone, methyl ethyl ketone, methyl isobutyl ketone, diisobutyl ketone, isophorone, and cyclohexanone; ethers such as diethyl ether, dioxane, and tetrahydrofuran; esters such as ethyl acetate, butyl acetate, and isoamyl acetate; alcohols such as methanol, ethanol, n-propanol, isopropanol, n-butanol, n-pentanol, 2-ethylhexanol, cyclohexanol, diacetone alcohol, ethylene glycol, propylene glycol, diethylene glycol, and glycerin; ether/alcohols and ether/esters such as ethylene glycol monoethyl ether, ethylene glycol monobutyl ether, ethylene glycol monoethyl ether acetate, propylene glycol monoethyl ether, propylene glycol monopropyl ether, propylene glycol monobutyl ether, and propylene glycol monomethyl ether acetate; and mixtures thereof. The amount of solvent is adjusted such that a composition (final product) prepared by dispersing desired components of conductive powder, high-refractive index powder, and light-transmission-ensuring microparticles has a viscosity suitable for coating or printing. The composition of the present invention for forming transparent conductive film preferably has a viscosity of 2 to 10,000 cps (E-type viscometer: 20°C).

The composition of the present invention for forming transparent conductive film may be produced through, for example, dispersing desired components of conductive powder, high-refractive index powder, and light-transmission-ensuring microparticles in the binder component solution which has been optionally diluted with organic solvent. Alternatively, the composition may be produced through dispersing desired components of conductive powder, high-refractive index powder, and light-transmission-ensuring microparticles in an organic solvent and adding the binder component to the dispersion. Needless to say, the composition may also be produced through mixing together the binder component, desired components of conductive powder, high-refractive index powder, and light-transmission-ensuring microparticles, and an organic solvent in a single operation, to thereby form a dispersion. The dispersion process may be carried out through a routine method by means of a paint shaker, a ball mill, a sand mill, a centri-mill, a three-roll mill, or a similar apparatus. Needless to say, dispersion may be carried out through a generally performed stirring process.

Examples of the material of the substrate to which the composition of the present invention for forming transparent conductive film is applied so as to form transparent conductive film or antiglare transparent conductive film include synthetic resins, glass materials, and ceramic materials, which are widely employed in variety of fields including electrics and electronics. The substrate may have any shape such as sheet, film, or plate. Non-limitative specific examples of synthetic resins include polyethylene, polypropylene, polycarbonate, acrylic resin, methacrylic resin, poly(vinyl chloride), polyester resin, polyamide resin, and phenolic resin.

Application (coating or printing) of the composition of the present invention for forming transparent conductive film onto a substrate may be performed through a routine method such as roll coating, spin coating, or screen printing. Subsequently, when the binder component is not actinic-radiation-curable, if required, the applied composition is heated to evaporate solvent, to thereby dry and cure the coating film. Through this process, the binder component is polymerized, and tin hydroxide powder and light-transmission-ensuring microparticles are bound to the resin, whereby transparent conductive film is formed. The thus-formed transparent conductive film preferably has a thickness of 0.5 to 10 µm, more preferably 2 to 8 µm. When the binder component is actinic-radiation-curable, if required, the applied composition is heated to evaporate solvent, and the coating film is dried. Subsequently, the coating film is irradiated with actinic radiation (UV ray or electron beam). Examples of the source of actinic radiation which may be employed in the invention include UV sources such as a low-pressure mercury lamp, a high-pressure mercury lamp, a metal halide lamp, a xenon lamp, an excimer laser, and a dye layer and an electron beam accelerator. The dose of actinic radiation is preferably 50 to 3,000 mJ/cm² in the case of an UV ray, and 0.2 to 1,000 µC/cm² in the case of electron beam. By the action of actinic radiation, the binder component is polymerized, to thereby form a transparent conductive film in which conductive powder and light-transmission-ensuring microparticles are bound by resin. Preferably, the transparent conductive film has thickness of 0.1 to 10.0 µm.

The transparent conductive film of the present invention formed, on a substrate, from the composition of the present invention for forming transparent conductive film containing a binder component, and tin hydroxide powder and a high-refractive index powder which are dispersed in the binder component has excellent transparency, conductivity, and scratch resistance; e.g., a surface resistivity of preferably 10⁷ to 10¹² Ω/square, more preferably 10⁷ to 10¹¹ Ω/square, a light transmittance of preferably 85% or higher, and a haze of 2.5% or lower, can be produced. In addition, the refractive index of the transparent conductive film can be controlled. The transparent conductive film having such properties can be used as, for example, a dust-preventive film for use in electrophotographic recording or an antistatic film. The film may also be employed on a display screen.

The antiglare transparent conductive film of the present invention formed, on a substrate, from the composition of the present invention for forming antiglare transparent conductive film, containing a binder component, and tin hydroxide powder and light-transmission-ensuring microparticles which are dispersed in the binder component has excellent transparency, conductivity, and antiglare property; e.g., a surface resistivity of 10⁷ to 10¹² Ω/square, more preferably 10⁷ to 10¹¹ Ω/square, a light transmittance of preferably 85% or higher, and a haze of preferably 3 to 50%, more preferably 8 to 40%. The antiglare transparent conductive film having such properties can be used as, for example, a dust-preventive film for use in electrophotographic recording or an antistatic film. The film may also be employed on a display screen.

The transparent conductive film of the present invention formed, on a substrate, from the composition of the present invention for forming transparent conductive film, containing a binder component and a conductive powder dispersed in the binder component, wherein the binder component is an actinic-radiation-curable binder component, the conductive powder is formed of tin hydroxide powder and a conductive powder other than tin hydroxide powder has excellent transparency, conductivity, and scratch resistance; e.g., a surface resistivity of preferably 10⁶ to 10¹¹ Ω/square, more preferably 10⁶ to 10¹⁰ Ω/square, a light transmittance of preferably 85% or higher, and a haze of preferably 2.5% or lower. The transparent conductive film having such properties can be used as, for example, a dust-preventive film for use in electrophotographic recording or an antistatic film. The film may also be employed on a display screen.

The present invention will next be described in detail by way of Experimental Examples. Unless otherwise specified, in the Experimental Examples, the unit "part(s)" refers to "part(s) by mass." In Experimental Examples 1 to 14, the tin hydroxide powder was formed of particles having a mean primary particle size of 0.05 µm and had a resistivity of 1 × 10⁷ Ω·cm. The tin hydroxide powder containing phosphorus as a dopant had a P/(Sn + P) of 5.0 at% and was formed of particles having a mean primary particle size of 0.05 µm.

### Experimental Example 1

A binder component composed of trimethylolpropane triacrylate (20 parts) and polyester acrylate (10 parts), tin hydroxide powder (25 parts), zirconium oxide powder (45 parts), isobutanol (solvent) (150 parts), and glass beads (250 parts) were placed in a vessel and kneaded for five hours by means of a paint-shaker, with the dispersion state being monitored by means of a particle gauge. After kneading, 2-benzyl-2-dimethylamino-1-(4-morpholinophenyl)-butanone-1 (3 parts) serving as a photopolymerization initiator was added to the kneaded product, and the mixture was completely dissolved. Glass beads were removed, to thereby produce a viscous liquid. Subsequently, the viscous liquid was applied onto a PET film (thickness: 100 µm, Toyobo A4100) by means of a roll coater, and organic solvent was evaporated. The formed coating was irradiated with a UV ray from a high-pressure mercury lamp at a dose of 500 mJ/cm², whereby a transparent cured coating film having a thickness of 5 µm was formed.

### Experimental Example 2

A binder component composed of trimethylolpropane triacrylate (30 parts), tin hydroxide powder containing phosphorus as a dopant (70 parts), isobutanol (solvent) (150 parts), and glass beads (250 parts) were placed in a vessel and kneaded for five hours by means of a paint-shaker, with the dispersion state being monitored by means of a particle gauge. After kneading, 2-benzyl-2-dimethylamino-1-(4-morpholinophenyl)-butanone-1 (3 parts) serving as a photopolymerization initiator was added to the kneaded product, and the mixture was completely dissolved. Glass beads were removed, to thereby produce a viscous liquid (composition A). Separately, the procedure of preparing composition A was repeated, except that titanium oxide powder (70 parts) was used instead of tin hydroxide powder (70 parts), to thereby produce another viscous liquid (composition B). The thus-produced composition A (80 parts) and composition B (20 parts) were sufficiently mixed, to thereby prepare a coating liquid. Subsequently, in a manner similar to that of Experimental Example 1, a transparent cured coating film having a thickness of 5 µm was formed.

### Experimental Example 3

A binder component composed of dipentaerythritol hexaacrylate (20 parts) and polyester acrylate (10 parts), tin hydroxide powder (70 parts), isobutanol (solvent) (150 parts), and glass beads (250 parts) were placed in a vessel and kneaded for five hours by means of a paint-shaker, with the dispersion state being monitored by means of a particle gauge. After kneading, 2-benzyl-2-dimethylamino-1-(4-morpholinophenyl)-butanone-1 (3 parts) serving as a photopolymerization initiator was added to the kneaded product, and the mixture was completely dissolved. Glass beads were removed, to thereby produce a viscous liquid. Subsequently, the viscous liquid was applied onto a PET film (thickness: 100 µm, Toyobo A4100) by means of a roll coater, and organic solvent was evaporated. The formed coating was irradiated with a UV ray from a high-pressure mercury lamp at a dose of 500 mJ/cm², whereby a transparent cured coating film having a thickness of 5 µm was formed.

The total light transmittance (%) and haze (%) of the transparent cured coating films produced in Experimental Examples 1 to 3 were determined by means of TC-HIII DPK (product of Tokyo Denshoku Technical Center). These values were determined when each film was stacked on a substrate. The surface resistivity (Ω/square) of each film was determined by a surface resistivity meter (Hiresta IP MCP-HT260, product of Mitsubishi Chemical Co., Ltd.). Scratch resistance was evaluated visually based on the ratings described hereinbelow. The refractive index of each film was determined through the following procedure. Firstly, each of the coating liquids produced in Experimental Examples 1 to 3 was applied onto a silicon wafer by means of a bar-coater, and organic solvent was evaporated. The formed coating was irradiated with a UV ray from a high-pressure mercury lamp at a dose of 500 mJ/cm², whereby a transparent cured coating film having a thickness of 0.2 µm was formed. The refractive index of the obtained sample was determined by means of Filmtek 3000 (product of SCI). The results are shown in Table 1. In Table 1, the type and composition of the conductive powder and high-refractive index powder and the ratio (conductive powder + high-refractive index powder)/binder component are also shown.

### <Ratings for scratch resistance evaluation>

The surface of each transparent cured coating film sample was scratched reciprocally 10 times with steel wool (#0000) at a load of 1,000 g. The surface state after scratching was visually evaluated based on the following ratings:
○: no scratches;
Δ: slightly scratched; and
X: scratched.

[Table 1]

**Table 1**

| | Conductive powder/high-refractive index powder (relative amount) | P/B | Surface resistivity (Ω/square) | Light transmittance (%) | Haze | Scratch resistance | Refractive index |
|---|---|---|---|---|---|---|---|
| Exp. Ex. 1 | Sn hydroxide/Zr oxide (36/64) | 70/30 | 5 × 10¹⁰ | 87 | 1.7 | ○ | 1.66 |
| Exp. Ex. 2 | P-doped Sn hydroxide/Ti oxide (80/20) | 70/30 | 8 × 10⁸ | 86 | 2.1 | ○ | 1.64 |
| Exp. Ex. 3 | Sn hydroxide (100/0) | 70/30 | 2 × 10⁸ | 88 | 1.4 | X | 1.60 |

In Table 1, P denotes the relative amount of conductive powder + high-refractive index powder, and B denotes the relative amount of binder component.

As is clear from Table 1, when a composition for forming transparent conductive film, the composition containing tin hydroxide powder and high-refractive index powder, was applied to a substrate (Experimental Examples 1 and 2), a transparent conductive film having excellent transparency, conductivity, and scratch resistance; e.g., a surface resistivity of 10⁷ to 10¹¹ Ω/square, a light transmittance of 85% or higher, and a haze of 2.5% or lower, was produced, and the refractive index of the film could be controlled. However, when a composition for forming transparent conductive film containing no high-refractive index powder was applied to a substrate (Experimental Example 3), the formed transparent film exhibited insufficient scratch resistance and low refractive index.

### Experimental Example 4

An acrylic resin solution (Dianal LR-90, solid content: 30%, product of Mitsubishi Rayon Co., Ltd.) (230 parts) serving as a binder component, tin hydroxide powder (30 parts), isopropyl alcohol (solvent) (150 parts), and glass beads (250 parts) were placed in a vessel and kneaded for five hours by means of a paint-shaker, with the dispersion state being monitored by means of a particle gauge. After kneading, glass beads were removed, to thereby produce a viscous liquid. To the viscous liquid, a dispersion of light-transmission-ensuring microparticles (NV. 20%) (50 parts), which is a dispersion of Sylophobic #200 (inorganic filler, particle size: 4.0 µm, product of Fuji Silysia Chemical Ltd.) serving as light-transmission-ensuring microparticles in isopropyl alcohol, was added. Subsequently, the resultant viscous liquid was applied onto a PET film (thickness: 75 µm, Toyobo A4300, light transmittance: 91%, haze: 0.7%) by means of a roll coater, and organic solvent was evaporated. The formed coating was dried at 60°C for 10 minutes, whereby an antiglare transparent conductive film having a thickness of 3 µm was formed.

### Experimental Example 5

The procedure of Example 4 was repeated, except that a dispersion of light-transmission-ensuring microparticles (NV. 10%) (100 parts) in which an organic filler MX-300 (particle size: 2.8 µm, product of Soken Chemical Engineering Co., Ltd.) was dispersed in isopropyl alcohol was used instead of the dispersion of light-transmission-ensuring microparticles (NV. 20%) (50 parts) in which Sylophobic #200 was dispersed in isopropyl alcohol, to thereby form an antiglare transparent conductive film having a thickness of 2.5 µm.

### Experimental Example 6

The procedure of Example 4 was repeated, except that the amount of the dispersion of light-transmission-ensuring microparticles (NV. 20%) in which Sylophobic #200 was dispersed in isopropyl alcohol was changed from 50 parts to 100 parts, to thereby form an antiglare transparent conductive film having a thickness of 3 µm.

### Experimental Example 7

The procedure of Example 4 was repeated, except that tin hydroxide powder (30 parts) was changed to tin hydroxide powder containing phosphorus as a dopant (30 parts), to thereby form an antiglare transparent conductive film having a thickness of 3 µm.

### Experimental Example 8

Tin hydroxide powder (30 parts), butyl acetate (solvent) (200 parts), and glass beads (250 parts) were placed in a vessel and kneaded for five hours by means of a paint-shaker, with the dispersion state being monitored by means of a particle gauge. After kneading, glass beads were removed. The thus-formed dispersion was mixed with an acrylic resin (Dianal HR-633, solid content: 50%, product of Mitsubishi Rayon Co., Ltd.) (70 parts) and a melamine resin (U-Van 225, solid content: 60%, product of Mitsui Chemicals, Inc.) (58 parts) serving as binder components by means of a disper with stirring, to thereby produce a viscous liquid. To the viscous liquid, a dispersion of light-transmission-ensuring microparticles (NV. 20%) (50 parts), which is a dispersion of Sylophobic #200 serving as light-transmission-ensuring microparticles in isopropyl alcohol, was added. Subsequently, the resultant viscous liquid was applied onto a PET film (thickness: 75 µm, Toyobo A4300, light transmittance: 91%, haze: 0.7%) by means of a roll coater, and organic solvent was evaporated. The formed coating was dried at 120°C for 15 minutes, whereby an antiglare transparent conductive film having a thickness of 3 µm was formed.

### Experimental Example 9

The procedure of Example 4 was repeated, except that the amount of the amount of the acrylic resin solution (Dianal LR-90, solid content: 30%, product of Mitsubishi Rayon Co., Ltd.) was changed from 230 parts to 100 parts, and the amount of tin hydroxide powder was changed from 30 parts to 70 parts, to thereby form an antiglare transparent conductive film having a thickness of 5 µm.

### Experimental Example 10

The procedure of Example 4 was repeated, except that tin hydroxide powder (30 parts) was changed to ITO powder (30 parts), to thereby form an antiglare transparent conductive film having a thickness of 5 µm.

### Experimental Example 11

The procedure of Example 4 was repeated, except that tin hydroxide powder (30 parts) was changed to tin oxide powder (30 parts), to thereby form an antiglare transparent conductive film having a thickness of 5 µm.

### Experimental Example 12

The procedure of Example 4 was repeated, except that a dispersion of light-transmission-ensuring microparticles was not added, to thereby form an antiglare transparent conductive film having a thickness of 3 µm.

### Experimental Example 13

The procedure of Example 4 was repeated, except that the amount of dispersion of light-transmission-ensuring microparticles (NV. 20%) was changed from 50 parts to 600 parts, to thereby form an antiglare transparent conductive film having a thickness of 3 µm.

### Experimental Example 14

The procedure of Example 4 was repeated, except that the amount of dispersion of light-transmission-ensuring microparticles (NV. 20%) was changed from 50 parts to 0.25 parts, to thereby form an antiglare transparent conductive film having a thickness of 3 µm.

The total light transmittance, haze, and surface resistivity of each of the antiglare transparent conductive films produced in Experimental Examples 4 to 14 were determined in a manner similar to that of Experimental Example 1. The results are shown in Table 2.

[Table 2]

**Table 2**

| | Conductive powder | Light-transmission-ensuring microparticles | P/B | X/Y | Surface resistivity (Ω/square) | Light transmittance (%) | Haze (%) |
|---|---|---|---|---|---|---|---|
| Exp. Ex. 4 | Sn hydroxide | yes | 30/70 | 91/9 | 7 × 10¹⁰ | 88 | 15 |
| Exp. Ex. 5 | Sn hydroxide | yes | 30/70 | 91/9 | 7 × 10¹⁰ | 88 | 15 |
| Exp. Ex. 6 | Sn hydroxide | yes | 30/70 | 83/17 | 7 × 10¹⁰ | 88 | 45 |
| Exp. Ex. 7 | P-doped Sn hydroxide | yes | 30/70 | 91/9 | 5 × 10¹⁰ | 88 | 15 |
| Exp. Ex. 8 | Sn hydroxide | yes | 70/30 | 91/9 | 1 × 10⁹ | 88 | 48 |
| Exp. Ex. 9 | Sn hydroxide | yes | 70/30 | 91/9 | 1 × 10⁹ | 88 | 48 |
| Exp. Ex. 10 | ITO | yes | 30/70 | 91/9 | 1 × 10⁵ | 82 | 15 |
| Exp. Ex. 11 | Sn oxide | yes | 30/70 | 91/9 | 7 × 10⁶ | 83 | 15 |
| Exp. Ex. 12 | Sn hydroxide | no | 30/70 | 100/0 | 7 × 10¹⁰ | 89 | 0.5 |
| Exp. Ex. 13 | Sn hydroxide | yes | 30/70 | 45/55 | 7 × 10¹⁰ | 84 | 65 |
| Exp. Ex. 14 | Sn hydroxide | yes | 30/70 | 99.95/0.05 | 7 × 10¹⁰ | 89 | 1 |

In Table 2, P denotes a conductive powder (e.g., tin hydroxide powder), and B denotes a binder component. X denotes a total mass of conductive powder and binder component, and Y denotes a mass of light-transmission-ensuring microparticles.

As is clear from Table 2, when a composition for forming antiglare transparent conductive film, the composition containing tin hydroxide powder and light-transmission-ensuring microparticles, was applied to a substrate (Experimental Examples 4 to 9), an antiglare transparent conductive film having excellent transparency, conductivity, and antiglare effect; e.g., a surface resistivity of 10⁷ to 10¹² Ω/square, a light transmittance of 85% or higher, and a haze of 3 to 50%, was produced. The thus-formed film had a satisfactory FPD optical film function. However, when a similar composition for forming transparent conductive film containing ITO powder or tin oxide powder was applied to a substrate (Experimental Examples 10 and 11), the formed transparent film exhibited a light transmittance less than 85%. When the amount of light-transmission-ensuring microparticles added to the composition fell outside an appropriate range (Experimental Examples 12 to 14), a desired antiglare affect was not attained.

In Experimental Examples 15 to 21, the tin hydroxide powder was formed of particles having a mean primary particle size of 0.04 µm and had a resistivity of 1 × 10⁷ Ω·cm. The tin hydroxide powder containing phosphorus as a dopant has a P/(Sn + P) of 5.0 at% and was formed of particles having a mean primary particle size of 0.04 µm. Tin oxide was in the form of particles having a mean primary particle size of 0.04 µm, ATO was in the form of particles having a mean primary particle size of 0.02 µm, and ITO was in the form of particles having a mean primary particle size of 0.04 µm.

### Experimental Example 15

A binder component composed of trimethylolpropane triacrylate (10 parts) and polyester acrylate (5 parts), tin hydroxide powder (conductive powder) (65 parts), tin oxide powder (20 parts), ethyl alcohol (solvent) (150 parts), and glass beads (250 parts) were placed in a vessel and kneaded for five hours by means of a paint-shaker, with the dispersion state being monitored by means of a particle gauge. After kneading, 2-benzyl-2-dimethylamino-1-(4-morpholinophenyl)-butanone-1 (3 parts) serving as a photopolymerization initiator was added to the kneaded product, and the mixture was completely dissolved. Glass beads were removed, to thereby produce a viscous liquid. Subsequently, the viscous liquid was applied onto a PET film (thickness: 100 µm, Toyobo A4100) by means of a roll coater, and organic solvent was evaporated. The formed coating was irradiated with a UV ray from a high-pressure mercury lamp at a dose of 500 mJ/cm², whereby a transparent cured coating film having a thickness of 5 µm was formed.

### Experimental Example 16

A binder component composed of trimethylolpropane triacrylate (25 parts) and polyurethane acrylate (5 parts), tin hydroxide powder containing phosphorus as a dopant (conductive powder) (70 parts), isobutanol (solvent) (150 parts), and glass beads (250 parts) were placed in a vessel and kneaded for five hours by means of a paint-shaker, with the dispersion state being monitored by means of a particle gauge. After kneading, 2-benzyl-2-dimethylamino-1-(4-morpholinophenyl)-butanone-1 (3 parts) serving as a photopolymerization initiator was added to the kneaded product, and the mixture was completely dissolved. Glass beads were removed, to thereby produce a viscous liquid (composition A for forming transparent conductive film). Separately, the procedure of preparing composition A for forming transparent conductive film was repeated, except that ATO powder (70 parts) was used instead of P (dopant)-containing tin hydroxide powder (70 parts), to thereby produce another viscous liquid (composition B for forming transparent conductive film). The thus-produced composition A for forming transparent conductive film (65 parts) and composition B for forming transparent conductive film (5 parts) were sufficiently mixed, to thereby prepare a coating liquid. Subsequently, in a manner similar to that of Experimental Example 15, a transparent cured coating film having a thickness of 5 µm was formed.

### Experimental Example 17

The procedure of Experimental Example 15 was repeated, except that a binder component of dipentaerythritol hexaacrylate (60 parts), a conductive powder formed of tin hydroxide powder (30 parts), tin oxide powder (5 parts), and ITO powder (5 parts), and a solvent formed of isopropyl alcohol (120 parts) and methyl ethyl ketone (30 parts) were used, to thereby form a transparent cured coating film having a thickness of 5 µm.

### Experimental Example 18

The procedure of Experimental Example 15 was repeated, except that a binder component formed of dipentaerythritol hexaacrylate (75 parts) and polyester acrylate (15 parts), a conductive powder formed of tin hydroxide powder (5 parts) and tin oxide powder (5 parts), and a solvent of diacetone alcohol (150 parts) were used, to thereby form a transparent cured coating film having a thickness of 5 µm.

### Experimental Example 19

An acrylic resin solution (Dianal LR-90, solid content: 30%, product of Mitsubishi Rayon Co., Ltd.) (30 parts) serving as a binder component, ITO powder (conductive powder) (70 parts), diacetone alcohol (solvent) (150 parts), and glass beads (250 parts) were placed in a vessel and kneaded for five hours by means of a paint-shaker, with the dispersion state being monitored by means of a particle gauge. After kneading, glass beads were removed, to thereby produce a viscous liquid. Subsequently, the viscous liquid was applied onto a PET film (thickness: 100 µm, Toyobo A4100) by means of a roll coater, and organic solvent was evaporated. The formed coating was dried at 60°C for 10 minutes, whereby an antiglare transparent conductive film having a thickness of 5 µm was formed.

### Experimental Example 20

The procedure of Experimental Example 15 was repeated, except that tin hydroxide powder (30 parts) and tin oxide powder (40 parts) were used as conductive powder, to thereby form a transparent cured coating film having a thickness of 5 µm.

### Experimental Example 21

The procedure of Experimental Example 15 was repeated, except that tin oxide powder (2 parts) and ATO powder (8 parts) were used as conductive powder, to thereby form a transparent cured coating film having a thickness of 5 µm.

The total light transmittance, haze, surface resistivity, and scratch resistance of each of the transparent conductive films produced in Experimental Examples 15 to 21 were determined and evaluated in a manner similar to that of Experimental Example 1. The results are shown in Table 3. In Table 3, the composition of the conductive powder and the ratio P/B (tin hydroxide powder content (mass%)) are also shown.

[Table 3]

**Table 3**

| | Composition of conductive powder (Sn hydroxide powder content) | P/B | Surface resistivity (Ω/square) | Light transmittance (%) | Haze (%) | Scratch resistance |
|---|---|---|---|---|---|---|
| Exp. Ex. 15 | Sn hydroxide/Sn oxide (76.5%) | 85/15 | 8 × 10⁶ | 86 | 1.8 | ○ |
| Exp. Ex. 16 | P-doped Sn hydroxide/ATO (92.9%) | 70/30 | 7 × 10⁷ | 87 | 2.1 | ○ |
| Exp. Ex. 17 | Sn hydroxide/Sn oxide/ITO (75.0%) | 40/60 | 3 × 10⁸ | 86 | 1.7 | ○ |
| Exp. Ex. 18 | Sn hydroxide/Sn oxide (50.0%) | 10/90 | 9 × 10⁹ | 88 | 1.2 | ○ |
| Exp. Ex. 19 | ITO (0%) | 70/30 | 3 × 10⁵ | 82 | 1.4 | × |
| Exp. Ex. 20 | Sn hydroxide/Sn oxide (42.9%) | 70/30 | 6 × 10⁶ | 84 | 1.8 | ○ |
| Exp. Ex. 21 | Sn hydroxide/ATO (20.0%) | 10/90 | >10¹² | 80 | 1.1 | ○ |

In Table 3, P denotes a conductive powder, and B denotes a binder component.

As is clear from Table 3, when a composition for forming transparent conductive film, the composition containing, as conductive powder, tin hydroxide powder and a conductive powder other than tin hydroxide powder, was applied to a substrate (Experimental Examples 15 to 18), a transparent conductive film having excellent transparency, conductivity, and scratch resistance; e.g., a surface resistivity of 10⁶ to 10¹⁰ Ω/square, a light transmittance of 85% or higher, and a haze of 2.5% or lower, was produced. However, when a composition for forming transparent conductive film having an ITO powder content or a tin hydroxide powder content (with respect to the total amount of conductive powder) falling outside a range of 45 to 99 mass% was applied to a substrate (Experimental Examples 19 to 21), the formed transparent film exhibited a light transmittance less than 85%. When a composition for forming transparent conductive film containing no actinic-radiation-curable binder component was applied to a substrate (Experimental Example 19), the formed film exhibited low scratch resistance.

## Claims

1. A composition for forming transparent conductive film, **characterized by** comprising a binder component, and tin hydroxide powder and a high-refractive index powder which are dispersed in the binder component.

2. A composition for forming transparent conductive film as described in claim 1, wherein the tin hydroxide powder contains, as a dopant, at least one species selected from among P, A1, In, Zn, and Sb.

3. A composition for forming transparent conductive film as described in claim 2, wherein the amount of dopant which is at least one species selected from among P, A1, In, Zn, and Sb is 0.1 to 20 at% with respect to the total amount of dopant and Sn.

4. A composition for forming transparent conductive film as described in any one of claims 1 to 3, wherein the high-refractive index powder is formed of at least one species selected from the group consisting of zirconium oxide, titanium oxide, and cerium oxide.

5. A composition for forming transparent conductive film as described in any one of claims 1 to 4, wherein the ratio by mass represented by conductive powder/high-refractive index powder is 30/70 to 90/10.

6. A composition for forming transparent conductive film as described in any one of claims 1 to 5, wherein the ratio by mass represented by (conductive powder + high-refractive index powder)/binder component is 5/95 to 95/5.

7. A composition for forming antiglare transparent conductive film, **characterized by** comprising a binder component, and tin hydroxide powder and light-transmission-ensuring microparticles which are dispersed in the binder component, wherein, when the total mass of the tin hydroxide powder and the binder component is represented by X, and the mass of light-transmission-ensuring microparticles is represented by Y, the ratio by mass represented by X/Y falls within a range of 99.9/0.1 to 50/50.

8. A composition for forming antiglare transparent conductive film as described in claim 7, wherein the ratio by mass represented by tin hydroxide powder/binder component is 5/95 to 95/5.

9. A composition for forming antiglare transparent conductive film as described in claim 7 or 8, wherein the light-transmission-ensuring microparticles are formed of at least one species selected from the group consisting of inorganic fillers and resin fillers.

10. A composition for forming antiglare transparent conductive film as described in any one of claims 7 to 9, wherein the tin hydroxide powder contains, as a dopant, at least one species selected from among P, A1, In, Zn, and Sb.

11. A composition for forming antiglare transparent conductive film as described in claim 10, wherein the amount of dopant which is at least one species selected from among P, Al, In, Zn, and Sb is 0.1 to 20 at% with respect to the total amount of dopant and Sn.

12. A composition for forming transparent conductive film, **characterized by** comprising a binder component and a conductive powder dispersed in the binder component, wherein the binder component is an actinic-radiation-curable binder component, the conductive powder is formed of tin hydroxide powder and a conductive powder other than tin hydroxide powder, and the tin hydroxide powder accounts for 45 to 99 mass% with respect to the entire conductive powder.

13. A composition for forming transparent conductive film as described in claim 12, wherein the tin hydroxide powder contains, as a dopant, at least one species selected from among P, Al, In, Zn, and Sb.

14. A composition for forming transparent conductive film as described in claim 13, wherein the amount of dopant which is at least one species selected from among P, Al, In, Zn, and Sb is 0.1 to 20 at% with respect to the total amount of dopant and Sn.

15. A composition for forming transparent conductive film as described in any one of claims 12 to 14, wherein the conductive powder other than tin hydroxide powder is formed of at least one species selected from the group consisting of tin oxide, indium tin oxide, and antimony tin oxide.

16. A composition for forming transparent conductive film as described in any one of claims 12 to 15, wherein the ratio by mass represented by conductive powder/binder component is 5/95 to 95/5.

17. A transparent conductive film, **characterized in that** the film is produced by applying a composition for forming transparent conductive film as recited in any one of claims 1 to 6 through coating or printing, and curing the applied composition.

18. A transparent conductive film as described in claim 17, which has a surface resistivity of 10⁷ to 10¹¹ Ω/square, a light transmittance of 85% or higher, and a haze of 2.5% or lower.

19. An antiglare transparent conductive film, **characterized in that** the film is produced by applying a composition for forming antiglare transparent conductive film as recited in any one of claims 7 to 11 through coating or printing, and drying the applied composition.

20. An antiglare transparent conductive film as described in claim 19, which has a surface resistivity of 10⁷ to 10¹² Ω/square, a light transmittance of 85% or higher, and a haze of 3 to 50%.

21. A transparent conductive film, **characterized by** being produced by applying a composition for forming transparent conductive film as recited in any one of claims 12 to 16 through coating or printing, and curing the applied composition through irradiation with actinic radiation.

22. A transparent conductive film as described in claim 21, which has a surface resistivity of 10⁶ to 10¹⁰ Ω/square, a light transmittance of 85% or higher, and a haze of 2.5% or lower.

23. A display **characterized by** having, on a screen thereof, a transparent conductive film as recited in any one of claims 17 to 21.
